# EUROPÄISCHE PATENTSCHRIFT

(11) **EP 2 523 333 B1**
(45) Veröffentlichungstag und Bekanntmachung des Hinweises auf die Patenterteilung: **11.09.2019**
(21) Anmeldenummer: 11165626.0
(22) Anmeldetag: 11.05.2011
(51) Int. Cl.: H02M 5/458, H02J 7/34

(54) **Verfahren zum Betreiben eines Frequenzumrichters mit geregelter Vorladung**
Method for operating of a frequency inverter with a regulated pre-charge
Procédé de fonctionnement de convertisseur de fréquence avec une précharge réglée

(43) Veröffentlichungstag der Anmeldung: 14.11.2012
(73) Patentinhaber: Siemens Aktiengesellschaft, 80333 München (DE)
(72) Erfinder: Dillig, Reinhold, 96117, Memmelsdorf (DE); Herrmann, Bernd, 91074, Herzogenaurach (DE); Schwinn, Thomas, 91074, Herzogenaurach (DE)

(56) Entgegenhaltungen:
- EP-A1- 2 259 422
- WO-A2-2007/003544
- DE-U1- 9 216 662
- US-A1- 2009 212 726

## Beschreibung

Die Erfindung betrifft ein Verfahren zum Betreiben eines Frequenzumrichters mit einer Steuereinrichtung für eine geregelte Vorladung.

Ein Frequenzumrichter zum Betreiben einer elektrischen Maschine an einem elektrischen Versorgungsnetz ist aus der DE 197 39 553 A1 bekannt. Bei dem Frequenzumrichter ist eine Einspeiseeinheit über einen Gleichspannungs-Zwischenkreis mit zumindest einem Umrichter gekoppelt. In dem Gleichspannungs-Zwischenkreis, oder kurz Zwischenkreis, ist zumindest ein Zwischenkreiskondensator bereitgestellt.

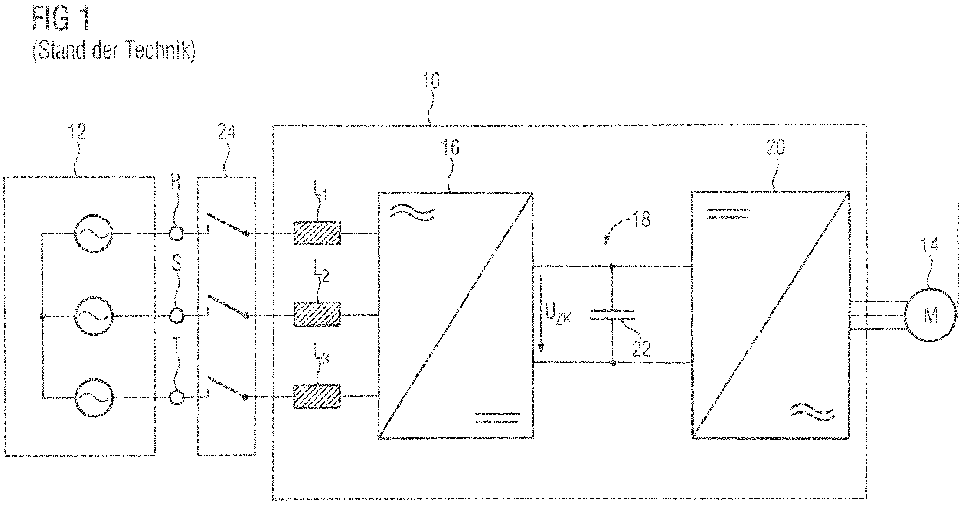

Die prinzipielle Funktionsweise eines Frequenzumrichters ist anhand der schematischen Darstellung in FIG 1 im Folgenden näher erläutert. Danach kann mittels eines Frequenzumrichters 10 elektrische Energie zwischen einem Wechselspannungs-Versorgungsnetz 12, im Folgenden kurz als Netz bezeichnet, und einer elektrischen Maschine 14 ausgetauscht werden. Die elektrische Maschine 14 kann ein Elektromotor oder ein Generator sein. Entsprechend erfolgt der Austausch der elektrischen Energie, d.h. der Leistungsfluss, entweder vom Netz 12 zur Maschine 14 oder umgekehrt.

Mittels des Frequenzumrichters 10 ist es dabei möglich, eine Umwandlung zwischen einer Netz-Wechselspannung mit vorgegebener Netzfrequenz einerseits und einer für den Betrieb der elektrischen Maschine 14 nötigen Wechselspannung mit wählbarer Frequenz andererseits durchzuführen. Eine netzseitige Einspeiseeinheit 16 wandelt dazu zwischen der Netz-Wechselspannung und einer Gleichspannung U_{ZK} um, die in einem Zwischenkreis 18 bereitgestellt wird. Ein Umrichter 20 wandelt zwischen der Gleichspannung U_{ZK} und einer Wechselspannung für die elektrische Maschine 14 um.

Das Netz 12 kann, wie hier dargestellt, ein Drehstromnetz mit drei Netzphasen R, S, T sein. Es kann sich bei dem Netz 12 aber z. B. auch um ein zweiphasiges Netz handeln. Auch die elektrische Maschine 14 kann eine Maschine mit einer beliebigen Anzahl von Phasen sein. Hier dargestellt ist eine dreiphasige Drehstrommaschine.

In dem Zwischenkreis 18 sorgt ein Zwischenkreiskondensator 22 durch eine ausreichend große Kapazität dafür, dass eine bei einem der beschriebenen Wandlungsschritte erzeugte Welligkeit der Gleichspannung U_{ZK} so weit geglättet ist, dass sie den anderen Wandlungsschritt nicht beeinflusst. Bevorzugt ist die Zwischenkreiskapazität auch groß genug, um bei einem kurzzeitigen Ausfall der Netz-Wechselspannung für einige Millisekunden einen unterbrechungsfreien Betrieb der elektrischen Maschine zu ermöglichen.

Der Einspeiseeinheit 16 können netzseitig Drosseln L₁, L₂, L₃ vorgeschaltet sein. Sie verhindern, dass von der Einspeiseeinheit 16 bei der Spannungswandlung erzeugte Störsignale als Oberwellen in das Netz 12 übertragen werden. Die Drosseln L₁, L₂, L₃ können eine weitere Funktion haben, wenn die Einspeiseeinheit 16 als Hochsetzsteller betrieben wird, der eine Gleichspannung U_{ZK} mit einem Effektivwert erzeugt, der unabhängig von einem Effektivwert der Netzspannung ist. Die Drosseln L₁, L₂, L₃ sind dann als Kommutierungsinduktivitäten ausgelegt, die verhindern, dass in einem getakteten Betrieb der Einspeiseeinheit 16 erzeugte Kurzschlüsse zwischen den einzelnen Netzphasen R, S, T in der Einspeiseeinheit 16 zu einem Kommutierungsstrom mit einer kritischen Stromstärke führen.

Um die elektrische Maschine 14 als Motor zu betreiben, wird durch Schließen eines Hauptschützes 24 die Einspeiseeinheit 16 mit den Netzphasen R, S, T des Netzes 12 elektrisch verbunden. Die Einspeiseeinheit 16 erzeugt daraufhin beispielsweise durch eine Vollweg-Gleichrichtung die Gleichspannung U_{ZK} in dem Zwischenkreis 18, wodurch der Zwischenkreiskondensator 22 aufgeladen wird. Dieser Ladevorgang wird im Folgenden als Vorladephase bezeichnet.

Nachdem der Zwischenkreiskondensator 22 so weit aufgeladen ist, dass die Gleichspannung U_{ZK} einen gewünschten Spannungswert erreicht hat, kann die elektrische Maschine 14 betrieben werden. Dazu erzeugt der Umrichter 20 aus der Gleichspannung U_{ZK} eine hier dreiphasige Wechselspannung, so dass in der elektrischen Maschine 14 ein Drehstrom fließt. Dieser Vorgang ist im Folgenden als Betriebsphase bezeichnet. Eine Frequenz des Drehstroms kann bei dem Umrichter 20 einstellbar sein.

Vor dem Schließen des Hauptschützes ist der Zwischenkreiskondensator 22 in der Regel ungeladen. In der Vorladephase ergibt sich hierdurch das Problem, dass nach dem Schließen des Hauptschützes 24 die Stromstärke des vom Netz 12 in den ungeladenen Zwischenkreiskondensator 22 fließenden Ladestroms aufgrund der großen Kapazität des Zwischenkreiskondensators 22 so groß werden kann, dass Komponenten der Einspeiseeinheit beschädigt werden.

Die oben genannte Druckschrift lehrt hierzu, zwischen einem Gleichspannungsausgang der Einspeiseeinheit und dem betreffenden Anschluss des Zwischenkreiskondensators ein Strombegrenzungselement vorzusehen, welches den Ladestrom des Zwischenkreiskondensators auf einen von der Ladespannung weitgehend unabhängigen Wert begrenzt. Nachteilig bei dieser Lösung ist, dass es sich bei dem Strombegrenzungselement um einen speziell anzufertigenden Halbleiter handelt, um für einen bestimmten Anwendungsfall die passende Kennlinie zu erhalten.

In dem Dokument EP 2 259 422 A1 ist eine Anlassschaltung für einen Generator beschrieben, mittels welcher der Generator mit elektrischer Energie aus einer Gleichspannungsquelle angefahren werden kann. Die Gleichspannungsquelle wird zum Anfahren des Generators über einen Schalter mit einem Filter und einem Glättungskondensator gekoppelt. Das Filter kann einen Filterkondensator aufweisen. Sobald der Generator selbständig elektrische Leistung erzeugt, wird mittels eines Schalters von der Gleichspannungsquelle auf die zu versorgende Last umgeschaltet. Nach dem Umschalten des Schalters sind auch der Glättungskondensator und das Filter mit der Last gekoppelt. Durch Modulieren eines Stellsignals eines Halbleiterschalters im Zwischenkreis auf Grundlage von gemessenen Größen kann eine Stromstärke zwischen dem Generator einerseits und der Gleichspannungsquelle bzw. der Last andererseits gesteuert werden.

In dem Dokument DE 92 16 662 U1 ist ein Frequenzumrichter mit einem Zwischenkreiskondensator im Gleichspannungszwischenkreis beschrieben. Der Zwischenkreiskondensator ist von der Einspeiseeinheit des Frequenzumrichters durch einen elektromechanischen Schalter trennbar. Um den Zwischenkreiskondensator mit einem begrenzten Aufladestrom vorladen zu können, ist der Zwischenkreiskondensator zusätzlich mit der Einspeiseeinheit über einen Vorladewiderstand gekoppelt.

In dem Dokument WO 2007/003544 A2 ist ein Frequenzumrichter mit einem Zwischenkreis beschrieben, bei dem der Zwischenkreiskondensator über einen Halbleiter-Leistungsschalter wahlweise dem Zwischenkreis zugeschaltet werden kann.

In der US 2009/0212726 A1 ist ein Frequenzumrichter nach dem Oberbegriff des unabhängigen Anspruchs, mit einer im Zwischenkreis angeordneten Schutzschaltung gegen Überströme beschrieben. Überströme werden von Über- oder Unterspannungen im Versorgungsnetzwerk verursacht. Eine Überspannung im Versorgungsnetz erzeugt einen hohen Strom in der Zwischenkreiskapazität, die die Dioden des Gleichrichters schädigen kann. Dadurch steigt ebenfalls die Zwischenkreisspannung und können der Wechselrichter sowie die Zwischenkreiskapazität schädigt werden. Ebenso wird nach einer Unterspannung im Versorgungsnetz in der Zwischenkreiskapazität ein hoher Strom erzeugt, der den Gleichrichter schädigen kann. Die Schutzschaltung im Zwischenkreis umfasst einen ersten Halbleiterschalter, zu dem parallel ein erster Widerstand geschaltet ist. Zu der Parallelschaltung des ersten Halbleiterschalters und des ersten Widerstands ist eine Reihenschaltung eines zweiten Widerstands mit einem zweiten Halbleiterschalter geschaltet. Abhängig vom Strom in der Zwischenkreiskapazität werden die Halbleiterschalter ein- oder ausgeschaltet. Parallel zum Ausgang der Diodengleichrichterschaltung ist im Gleichspannungszwischenkreis vor der Schutzschaltung eine Entkopplungskapazität angeordnet. Sie beschneidet für eine kurze Dauer hohe Überspannungen aus dem Versorgungsnetz. Transiente Überspannungen, die durch starke Stromänderungen beim Schalten des ersten Halbleiterschalters an den Eingangsinduktivitäten oder den Netzinduktivitäten induziert werden, werden mittels einer Spannungsbegrenzerschaltung, die parallel zur Entkopplungskapazität geschaltet ist, gekappt.

Es ist Aufgabe der vorliegenden Erfindung, für einen Frequenzumrichter der eingangs beschriebenen Art einen ausreichenden Schutz für dessen Einspeiseeinheit bereitzustellen, insbesondere soll eine Induktion von Spannungsspitzen durch den Betrieb einer Schutzschaltung im Gleichspannungs-Zwischenkreis vermieden werden.

Die Aufgabe wird durch ein Verfahren zum Betrieb eines Frequenzumrichters gemäß Patentanspruch 1 gelöst. Vorteilhafte Weiterbildungen des erfindungsgemäßen Verfahrens sind durch die Unteransprüche gegeben.

Der Frequenzumrichter ist eine Weiterbildung des eingangs beschriebenen Frequenzumrichters. Der Zwischenkreis im Frequenzumrichter weist einen Halbleiterschalter auf, der dazu ausgelegt ist, eine Stromstärke eines von der Einspeiseeinheit in den zumindest einen Zwischenkreiskondensator fließenden elektrischen Stromes zu steuern, indem beispielsweise sein Durchlasswiderstand entsprechend eingestellt wird. Das Steuern geschieht in Abhängigkeit von einem Steuersignal, das von einer Steuereinrichtung an einen Steuereingang des Halbleiterschalters übertragen wird.

Der Ladestrom des Zwischenkreiskondensators kann somit mittels des Halbleiterschalters zumindest in Bezug auf seine mittlere Stromstärke gesteuert oder auch insgesamt unterbrochen werden. Unter einem Steuersignal wird hier eine Steuerspannung oder ein Steuerstrom verstanden.

Der Frequenzumrichter weist eine Messeinrichtung zum Erfassen von Messwerten für zumindest eine Messgröße auf, die von einem Betriebszustand des Frequenzumrichters abhängig ist. Die Steuereinrichtung ist sowohl mit der Messeinrichtung als auch mit dem Halbleiterschalter gekoppelt. Sie ist dazu ausgelegt, das Steuersignal für den Halbleiterschalter in Abhängigkeit von den erfassten Messwerten zu erzeugen.

Im Zwischenkreis ist einspeiseseitig des Halbleiterschalters durch einen weiteren Kondensator eine Kommutierungskapazität für die Einspeiseeinheit bereitgestellt. Dieser Kommutierungskondensator ist also anders als der Zwischenkreiskondensator in dem Teil des Zwischenkreises angeordnet, der permanent mit dem Einspeisewandler elektrisch verbunden ist.

Mit einer Kommutierungskapazität ist hier eine Kapazität gemeint, deren Wert wesentlich kleiner als der Kapazitätswert des Zwischenkreiskondensators ist. Bevorzugt beträgt die Kommutierungskapazität weniger als zehn Prozent, insbesondere weniger als ein Prozent, der Zwischenkreiskapazität. Ein Betrag der Kommutierungskapazität kann auch in Abhängigkeit von einem Induktivitätswert der bereits beschriebenen Drosseln und/oder einer Induktivität des Netzes, an das der Frequenzumrichter angeschlossen ist, gewählt sein. Mittels der Kommutierungskapazität wird erreicht, dass eine beim Schalten von Komponenten des Einspeisewandlers entstehende Induktionsspannung stets unterhalb eines für die Funktionstüchtigkeit des Frequenzumrichters kritischen Spannungswerts bleibt. Indem die Kommutierungskapazität sehr viel kleiner als die Zwischenkreiskondensator-Kapazität gewählt ist, ist sichergestellt, dass durch einen Ladestrom des Kommutierungskondensators der Einspeisewandler beim Schließen des Hauptschützes nicht beschädigt wird.

Zum Aufladen des Zwischenkreiskondensators wird gemäß dem erfindungsgemäßen Verfahren zunächst die Einspeiseeinheit mit dem Netz gekoppelt und anschließend in der Vorladephase der Zwischenkreiskondensator mit elektrischer Energie aus dem Netz aufgeladen. Hierbei erzeugt die Steuereinrichtung das Steuersignal, durch welches die Stromstärke des Ladestromes des Zwischenkreiskondensators gesteuert wird. Dabei sieht das erfindungsgemäße Verfahren vor, den Halbleiterschalter in der Vorladephase zum Steuern der Stromstärke als steuerbare Stromquelle zu betreiben. Hierbei wird eine (momentane) Stromstärke eines durch den Halbleiterschalter fließenden Laststromes durch Einstellen des Steuersignals gesteuert. Unter einem Laststrom ist bei einem Bipolartransistor der Kollektor-Emitter-Strom zu verstehen, bei einem FET der Drain-Source-Strom. Im Betrieb als steuerbare Stromquelle ist die Stromstärke des Laststromes nahezu unabhängig von der Spannung, die über dem Halbleiterschalter in Flussrichtung des Laststromes abfällt. Die Stromstärke ist stattdessen über das Steuersignal am Steuereingang (Basis bzw. Gate) des Halbleiterschalters einstellbar. Bei einem Bipolartransistor entspricht diese Betriebsweise dem Betrieb im aktiven oder Verstärkungsbereich, bei einem FET dem Betrieb im Sättigungsbereich. Durch Betreiben des Halbleiterschalters als steuerbare Stromquelle ergibt sich der Vorteil, dass eine Induktion von Spannungsspitzen (z. B. durch Drosseln) vermieden werden kann, indem der Halbleiterschalter mit einem Steuersignal angesteuert wird, das eine geringe zeitliche Änderung des Verlaufs aufweist.

Das erfindungsgemäße Verfahren zum Betrieb des Frequenzumrichters weist den Vorteil auf, dass eine Stromstärke des Ladestroms des Zwischenkreiskondensators abhängig von dem Betriebszustand des Frequenzumrichters eingestellt werden kann. Somit wird ein gesteuertes Aufladen des Zwischenkreiskondensators in der Vorladephase ermöglicht, wodurch sich ein verbesserter Schutz der Einspeiseeinheit ergibt.

In einer Weiterbildung des erfindungsgemäßen Verfahrens wird das Steuersignal in Abhängigkeit von den Messwerten für zumindest eine der von der Steuereinrichtung beobachteten Messgrößen erzeugt.

Bei einer Weiterbildung des Frequenzumrichters ist der Halbleiterschalter bevorzugt zusätzlich dazu ausgelegt, einen von dem Einspeisewandler zu dem Umrichter fließenden Strom wahlweise, d.h. auf ein entsprechendes Steuersignal hin, zu unterbrechen. Dann ist es mittels des Halbleiterschalters zusätzlich möglich, im Falle eines Kurzschlusses im Zwischenkreiskondensator, im Umrichter oder in der elektrischen Maschine, einen Kurzschlussstrom ausreichend schnell zu unterbrechen, bevor auch die Einspeiseeinheit beschädigt wird. Selbiges gilt auch für einen Erdschluss.

Eine Weiterbildung des erfindungsgemäßen Verfahrens sieht entsprechend vor, in einer Betriebsphase des Frequenzumrichters auf der Grundlage der von der Messeinrichtung erfassten Messwerte eine Stromstärke zu überwachen und bei Erkennen eines Überstromes den Halbleiterschalter in einen sperrenden Zustand zu schalten. Das Überwachen der Stromstärke kann direkt durch Messen der Stromstärke oder indirekt durch Beobachten einer mit ihr korrelierten Größe erfolgen.

Die Messeinrichtung kann unterschiedlich ausgestaltet sein, um eine oder mehrere der folgenden Messgrößen beobachten zu können.

So kann eine über dem zumindest einen Zwischenkreiskondensator abfallende elektrische Spannung gemessen werden. Dadurch kann unmittelbar auf einen Ladezustand desselben rückgeschlossen werden. Es kann auch ein in dem Zwischenkreis fließender elektrischer Strom gemessen werden. Dann ist unmittelbar erkennbar, ob ein durch die Einspeiseeinheit fließender Strom einen kritischen Stromstärkewert überschreitet. Es kann auch eine an einem zwischenkreisseitigen Anschluss der Einspeiseeinheit anliegende elektrische Spannung gemessen werden. Dadurch ist eine schnellere Reaktion auf einen fehlerhaften Verlauf der Netzspannung oder auf ein kurzzeitiges Ausbleiben der Netzspannung ermöglicht. Eine noch schnellere Reaktion wird durch eine Messung einer an einem netzseitigen Anschluss der Einspeiseeinheit anliegende elektrische Spannung ermöglicht. Die Spannung kann hierbei unmittelbar an dem Anschluss oder (gegebenenfalls) zwischen zwei der Einspeiseeinheit netzseitig vorgeschalteten Kommutierungsdrosseln gemessen werden.

Es kann auch ein netzseitig in die Einspeiseeinheit fließender elektrischer Strom gemessen werden. Dies ermöglicht es, auch einen Kurzschluss in der Einspeiseeinheit selbst zu erkennen und die Einspeiseeinheit abzuschalten, bevor weitere ihrer Komponenten beschädigt werden.

Schließlich kann auch eine Temperatur einer Komponente des Frequenzumrichters gemessen werden. Ein zu großer Ladestrom des Zwischenkreiskondensators oder ein Kurzschluss führen in der Regel zu einer Zerstörung von Komponenten des Frequenzumrichters aufgrund einer Überhitzung eines Bauteils. Somit kann durch Überwachen der Temperatur von besonders gefährdeten Bauteilen, insbesondere des Halbleiterschalters oder einer Komponente der Einspeiseeinheit, noch vor deren Beschädigung erkannt werden, dass der Strom durch den Halbleiterschalter verringert oder unterbrochen werden muss.

Wie bereits erwähnt, ermittelt die Steuereinrichtung bei einer Ausführungsform des Frequenzumrichters eine Stromstärke indirekt aus den Messwerten für zumindest eine andere Messgröße, d.h. ohne dabei einen entsprechenden Sensor zum Erfassen der Stromstärke selbst. So kann auf diesen Sensor verzichtet werden, wodurch sich der Frequenzumrichter kostengünstiger herstellen lässt.

Der Halbleiterschalter umfasst bevorzugt einen Transistor, insbesondere einen SiC-MOSFET (SiC - Siliziumcarbid; MOS - Metall-Oxid-Halbleiter; FET - Feldeffekttransistor) oder einen SiC-JFET (JFET - Sperrschicht-FET, Junction-FET) oder einen auf Silizium basierenden Transistor (Si-Transistor; Si - Silizium). SiC-basierte Transistoren sind sehr Hitzebeständig, so dass mittels des Frequenzumrichters auch elektrische Maschinen mit einer großen elektrischen Leistung, beispielsweise über 10 kW, betrieben werden können. Ein Frequenzumrichter mit einem Si-Transistor ist kostengünstiger herstellbar als einer mit einem Transistor auf der Basis von SiC.

Bevorzugt ist der Halbleiterschalter selbstsperrend, d.h. bei einer Steuerspannung in einem Bereich um 0V befindet er sich in einem sperrenden Zustand. Dadurch ist in vorteilhafter Weise verhindert, dass bei einem Ausfall der Steuereinrichtung für den Halbleiterschalter ein unkontrollierter Strom in dem Zwischenkreis fließt.

Der Halbleiterschalter muss nicht aus einem einzigen Bauteil bestehen. Er kann auch eine Kaskodenschaltung aus einem MOSFET und einem JFET umfassen. Dann ergibt sich der Vorteil, dass in dem Zwischenkreis des Frequenzumrichters ein selbstsperrender Halbleiterschalter bereitgestellt ist. Der JFET ist bevorzugt auf der Grundlage von SiC gefertigt.

Bei dem Frequenzumrichter ist es möglich, mehrere Zwischenkreiskondensatoren bereitzustellen, die dann in einer Reihen- oder Parallelschaltung miteinander verschaltet sind. In diesem Fall ist dann die Gesamtkapazität der verschalteten Zwischenkreiskondensatoren so groß zu wählen, dass der bereits beschriebene Glättungseffekt der Zwischenkreis-Gleichspannung erreicht wird und gegebenenfalls auch ausreichend viel elektrische Energie für die Überbrückung eines kurzzeitigen Netzausfalls bereitgestellt ist. Bei einer Parallelschaltung können hierbei Kondensatoren mit einer geringeren Kapazität verwendet werden. Eine Reihenschaltung ermöglicht die Verwendung von Kondensatoren mit geringerer Maximalspannung.

Der Halbleiterschalter kann in vorteilhafter Weise auch dazu genutzt werden, die Einspeiseeinheit während der Betriebsphase nach einem kurzzeitigen Netzausfall zu schützen, wenn beispielsweise eine Halbwelle in einer der Phasen ausgeblieben ist. Ein solcher Netzausfall führt zu einer Unterbrechung eines von der Einspeiseeinheit aus dem Netz empfangenen elektrischen Leistungsflusses, so dass der Zwischenkreiskondensator nahezu vollständig entladen sein kann, wenn der Leistungsfluss wieder einsetzt. Gemäß einer Weiterbildung des erfindungsgemäßen Verfahrens wird hier der Zwischenkreiskondensator in einer Nachladephase durch Steuern der Stromstärke des in den zumindest einen Zwischenkreiskondensator fließenden Nachladestromes mittels des Halbleiterschalters wieder aufgeladen. So kann eine kritische Stromstärke des Nachladestromes vermieden werden.

Gemäß einer anderen Weiterbildung des erfindungsgemäßen Verfahrens wird ein Ladezustand des Zwischenkreiskondensators beobachtet. Falls nach einer vorbestimmten Zeitdauer nach Beginn der Vorladephase der Ladezustand ein vorbestimmtes Kriterium erfüllt, wenn also beispielsweise der Zwischenkondensator noch nicht zumindest zur Hälfte aufgeladen ist, wird die Vorladephase abgebrochen und der Halbleiterschalter in einen sperrenden Zustand geschaltet. So ist vorteilhaft vermieden, dass der Halbleiterschalter oder die Einspeiseeinheit beschädigt wird, wenn (umrichterseitig) im Zwischenkreis, im Umrichter selbst oder in der elektrischen Maschine bereits während der Vorladephase ein Kurzschluss vorhanden ist.

Im Folgenden wird die Erfindung anhand von Ausführungsbeispielen näher erläutert. Dazu zeigt:
- FIG 1: ein Blockschaltbild eines Frequenzumrichters gemäß dem Stand der Technik, mit dem eine elektrische Maschine an einem Netz betrieben wird,
- FIG 2: ein Blockschaltbild eines Frequenzumrichters, der gemäß einer Ausführungsform des erfindungsgemäßen Verfahrens betrieben werden kann, und
- FIG 3: einen Verlauf eines Steuersignals, das mittels einer Pulsamplitudenmodulation gebildet ist.

Die Ausführungsbeispiele stellen bevorzugte Ausführungsformen der Erfindung dar.

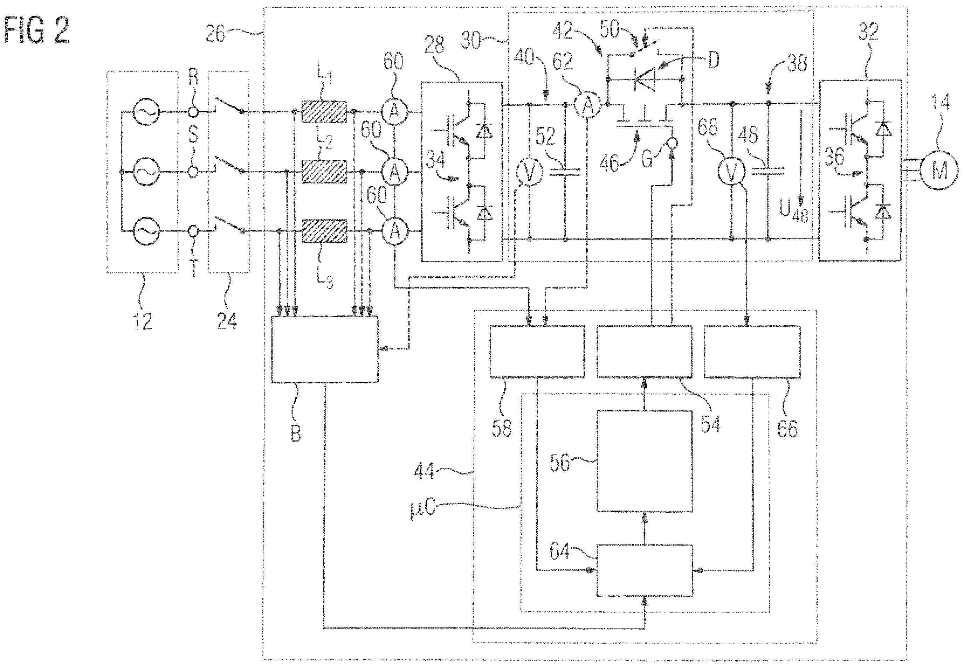

In FIG 2 ist ein Frequenzumrichter 26 gezeigt, der über ein Hauptschütz 24 an den Netzphasen R, S, T eines Netzes 12 angeschlossen ist. An den Frequenzumrichter 26 ist eine elektrische Maschine 14 angeschlossen. Das Netz 12, das Hauptschütz 24 und die elektrische Maschine 14, die in FIG 2 gezeigt sind, entsprechen den in FIG 1 gezeigten Elementen mit den gleichen Bezugszeichen. Diese Elemente sind hier deshalb nicht noch einmal erläutert.

Bei dem Frequenzumrichter 26 ist eine Einspeiseeinheit 28 über einen Zwischenkreis 30 mit einem Umrichter 32 verschaltet.

Die Einspeiseeinheit 28 kann in bekannter Weise ausgestaltet sein. Sie weist in dem gezeigten Beispiel zum Gleichrichten der zwischen den Netzphasen R, S, T anliegenden Wechselspannungen drei Halbbrücken auf, von denen in FIG 2 der Übersichtlichkeit halber nur eine Halbbrücke 34 ohne weitere Verschaltungselemente dargestellt ist. Die Einspeiseeinheit 28 kann auch als Wechselrichter zum Einspeisen von elektrischer Energie in das Netz 12 betrieben werden.

Der Umrichter 32 kann ebenfalls in bekannter Weise ausgestaltet sein. In dem vorliegenden Beispiel umfasst er drei Halbbrücken, von denen in FIG 2 lediglich eine Halbbrücke 36 (ohne Verschaltungselemente) dargestellt ist. Der Umrichter 32 ist hier als Wechsel- und als Gleichrichter betreibbar.

Der Einspeiseeinheit 28 sind netzseitig Drosseln L₁, L₂, L₃ vorgeschaltet, die als Kommutierungsinduktivitäten ausgebildet sind.

Ein umrichterseitiger Teil 38 des Zwischenkreises 30 und ein einspeiseseitiger Teil 40 sind über eine Schalteinrichtung 42 miteinander verschaltet. Ein Steuereingang G eines SiC-MOSFET 46 der Schalteinrichtung 42 ist mit einer Steuereinrichtung 44 gekoppelt. Über den SiC-MOSFET 46 sind der einspeiseseitige Teil 40 und der umrichterseitige Teil 38 des Zwischenkreises 30 miteinander gekoppelt. Die Steuereinrichtung 44 steuert einen Durchgangswiderstand des SiC-MOSFET 46 durch Erzeugen einer entsprechenden Steuerspannung am Steuereingang C. Der SiC-MOSFET 46 ist hier ein selbstsperrendes Bauteil. Anstelle des SiC-MOSFET 46 kann beispielsweise auch ein SiC-JFET oder eine Kaskodenschaltung aus einem MOSFET und einem JFET verwendet sein.

Eine Diode D der Schalteinrichtung 42 ermöglicht in einem Generatorbetrieb der elektrischen Maschine 14 einen Stromfluss vom Umrichter 32 zur Einspeiseeinheit 28. Hierdurch kann bei einem Generatorbetrieb der elektrischen Maschine 14 eine Einspeisung der erzeugten elektrischen Energie ins Netz ermöglicht werden, ohne dass der Halbleiterschalter 46 für eine bidirektionale Stromleitung ausgelegt sein muss.

Im umrichterseitigen Teil 38 befindet sich ein Zwischenkreiskondensator 48. Eine Kapazität des Zwischenkreiskondensators 48 kann in dem gezeigten Beispiel größer 1 mF sein.

In dem einspeiseseitigen Teil 40 sind Stromschienen des Zwischenkreises über einen Kommutierungskondensator 52 kapazitiv miteinander gekoppelt. Der Kommutierungskondensator 52 kann ein Keramik- oder Folienkondensator sein. Die Kapazität des Kommutierungskondensators 52 ist in diesem Beispiel kleiner als 5 µF. Sie ist aber im Allgemeinen in Abhängigkeit von einer über den Frequenzumrichter 26 bestimmungsgemäß übertragbaren Gesamtleistung gewählt, wobei sie zudem bevorzugt weniger als zehn Prozent der Kapazität des Zwischenkreiskondensators 48 beträgt.

Der Kapazitätswert des Zwischenkreiskondensators 48, d.h. die Zwischenkreiskapazität, ist derart groß, dass beim Schließen des Hauptschützes 24 die Halbbrücke 34 (und die übrigen Halbbrücken der Einspeiseeinheit 28) beschädigt würden, wenn der Ladestrom des Zwischenkreiskondensators 48 nicht begrenzt würde. Bei dem Frequenzumrichter 26 wird der Zwischenkreiskondensator 48 in einer Vorladephase allerdings mit einem Ladestrom aufgeladen, dessen Stromstärke einen kritischen Wert nicht überschreitet. Dazu stellt die Steuereinrichtung 44 die Steuerspannung am Steuereingang G derart ein, dass eine mittlere Stromstärke des durch den SiC-MOSFET 46 fließenden Ladestroms des Zwischenkreiskondensators 48 entsprechend begrenzt ist.

Dazu gibt eine Gatetreiberschaltung 54 der Steuereinrichtung 44 während des Schließens des Hauptschützes 24 eine negative Ansteuerspannung an den Steuereingang G aus, so dass der SiC-MOSFET 46 sicher sperrt. Nach dem Schließen des Hauptschützes 24 steigt die Spannung an dem Kommutierungskondensator 52 in diesem Beispiel auf einen Gleichrichtwert der verketteten Netzspannung an. Der Kommutierungskondensator 52 ist hierbei nur durch die Drosseln L₁, L₂, L₃ von dem Netz 12 getrennt, so dass ein Ladestrom nur durch deren Induktivität und die Induktivität des Netzes 12 selbst begrenzt wird. Da jedoch die Kapazität des Kommutierungskondensators 52, d.h. die Kommutierungskapazität, verhältnismäßig klein ist, werden durch den Ladestrom keine Komponenten des Frequenzumrichters 26 beschädigt. Während des Aufladens des Kommutierungskondensators 52 bleibt der Zwischenkreiskondensator 48 ungeladen, d.h. die über dem Zwischenkreiskondensator 48 abfallende Spannung liegt in einem Bereich um 0V.

Für das anschließende Aufladen des Zwischenkreiskondensators 48 in der Vorladephase wird der SiC-MOSFET 46 als gesteuerte Spannungsquelle betrieben.

Im Betrieb als gesteuerte Stromquelle (im Folgenden als gesteuerter Betrieb bezeichnet) kann der SiC-MOSFET 46 in einem Abschnürbereich betrieben werden. Hierbei dient eine Drain-Source-Strecke als Ladewiderstand für den Zwischenkreiskondensator 48, durch den dessen Ladestrom begrenzt wird. Über die Vorgabe der Gatespannung durch die Ansteuereinheit 56 und den somit folgenden Drain-Source-Widerstand kann das Aufladen des Zwischenkreiskondensators 48 gesteuert erfolgen. Der SiC-MOSFET 46 dient somit als gesteuerter Vorladewiderstand. Da es sich bei dem SiC-MOSFET 46 um einen Halbleiterschalter handelt, ist auch eine schnelle Anpassung des Vorladewiderstandes an eine Veränderung der umrichterseitigen Last möglich.

Die gesteuerte Betriebsweise kann durch ein Steuersignal ermöglicht werden, dessen zeitlicher Verlauf fest vorgegeben ist oder aber durch einen geregelten Betrieb des Frequenzumrichters 26.

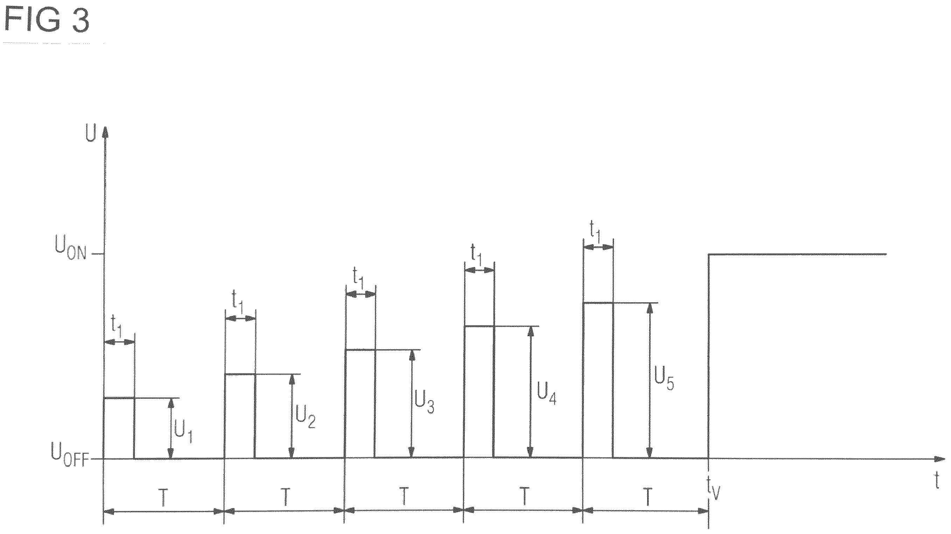

In FIG 3 ist ein Verlauf eines Steuersignals gezeigt, das mittels einer Pulsamplitudenmodulation gebildet ist. Das Steuersignal kann ebenfalls anstelle des Steuersignals S_{G} verwendet werden. Bei dem in FIG 3 gezeigten Steuersignal ergibt sich für jeden Umladezyklus dieselbe Gesamtdauer T. Auch eine Zeitdauer ti, während welcher das Steuersignal einen von U_{OFF} unterschiedlichen Wert aufweist, ist für jeden Umladezyklus dieselbe. Zum Einstellen der mittleren Stromstärke eines Stromflusses durch den SiC-MOSFET 46 während eines Umladezyklus sind Amplitudenwerte U₁ bis U₅, die das Steuersignal in dem jeweiligen Umladezyklus während der Zeitdauer t₁ annimmt, auf einen Wert zwischen U_{OFF} und U_{ON} eingestellt. Der SiC-MOSFET 46 wird hierdurch als steuerbare Stromquelle betrieben.

Indem die Gatespannung des SiC-MOSFET 46 mittels einer Regelung eingestellt wird, kann auf unterschiedliche oder unbekannte Zwischenkreiskapazitäten reagiert werden. Es ist zudem möglich, in der Vorladephase bereits eine elektrische Last, z.B. die elektrische Maschine 14, mit elektrischer Energie zu versorgen.

Sobald der Zwischenkreiskondensator 48 einen vorbestimmten Ladezustand erreicht hat, wenn also z.B. die über ihm abfallende Spannung U₄₈ einen vorbestimmten Schwellwert überschreitet, wird der Frequenzumrichter 26 in den Betriebszustand "Dauerein" geschaltet, d.h. die Vorladephase wird beendet und die Betriebsphase begonnen.

Für den Fall, dass der Schwellwert nicht innerhalb einer vorbestimmten Zeitdauer seit Beginn der Vorladephase erreicht wird, wird der Ladestrom mittels des SiC-MOSFET 46 unterbrochen, um dessen Beschädigung durch Verlustwärme zu vermeiden. Alternativ zu einer zeitlichen Überwachung kann auch eine direkte thermische Überwachung mittels eines (in FIG 2 nicht dargestellten) Temperatursensors vorgesehen sein. Es kann auch eine Anstiegsrate der Spannung U₄₈ durch die Ansteuereinheit 56 ermittelt werden, d.h. der zeitliche Anstieg beispielsweise der mittleren Spannung.

Die Betriebsphase "Dauerein" stellt den normalen Umrichterbetrieb des Frequenzumrichters 26 zum Betreiben der elektrischen Maschine 14 dar. Der Spannungswert der Spannung U₄₈ kann durch eine entsprechende Ansteuerung der Halbbrücken 34 und 36 (und der weiteren Halbbrücken) geregelt konstant gehalten werden. Alternativ kann (bei entsprechender schaltungstechnischer Ausführung der Einspeiseeinheit 28) ein ungeregelter, netzgeführter Betrieb vorgesehen sein.

Im Falle eines Kurzschlusses, z.B. im umrichterseitigen Teil 38 des Zwischenkreises 30, kann ein Netznachladestrom (mit einer Kurzschlussstromstärke) durch Sperren des SiC-MOSFET 46 schnell genug abgeschaltet werden, um eine Zerstörung der Halbbrücke 34 zu verhindern. Eine (nicht dargestellte) Zwischenkreissicherung oder das Hauptschütz 24 wären hierzu ungeeignet. Ob ein Kurzschlussstrom vorliegt, kann durch die Ansteuereinheit 56 ermittelt werden.

Einen weiteren Fehlerfall stellt ein kurzzeitiger Netzausfall dar. Bei Wiedereinsetzen der Netzspannung kann der Zwischenkreiskondensator 48 wieder auf den gewünschten Spannungswert für den normalen Umrichterbetrieb gebracht werden. Wie in der Vorladephase kann dieses Nachladen getaktet oder gesteuert durchgeführt werden.

Eine Unterbrechung eines Stromes mittels des SiC-MOSFET 46 kann auch durch einen Benutzer über eine (nicht dargestellte) Eingabevorrichtung ausgelöst werden.

Insgesamt ist durch die Steuereinrichtung 44 jederzeit sowohl ein getaktetes als auch ein gesteuertes Laden des Zwischenkreiskondensators 48 ermöglicht. Weiterhin sichert die Steuereinrichtung 44 das Abschalten des Zwischenkreises 30 vom Netz 12 im Fehlerfall.

Bei der Steuereinrichtung 44 muss nicht beides, eine Strom- und eine Spannungsmessung durch die Ansteuereinheit 56 ausgewertet werden. Vielmehr kann auch die Auswertung nur anhand einer Spannungsmessung erfolgen, da bei bekannter Last und Zwischenkreiskapazität bei gleichzeitiger Zwischenkreisspannungsmessung mit fest vorgegebenem Pulsverhältnis getaktet werden kann. Auch eine reine Strommessung ist denkbar, da zum Beispiel durch Vorgeben von Stromgrenzwerten der SiC-MOSFET 46 ein- bzw. ausgeschaltet werden kann (wie im Zusammenhang mit der Zweipunktregelung gezeigt). Die beste Ausführungsform ist jedoch die Auswertung von Strom- und Spannungsmessung. Für eine Abschaltung von Erdfehlern (z.B. einem Erdschluss in der elektrischen Maschine 14) bzw. eines Kurzschlussstromes im Zwischenkreis ist eine Strommessung bevorzugt.

Optional kann eine Netzspannungserfassung mittels eines Beobachters B verwendet werden. Diese ermöglicht eine schnellere Reaktion auf starke Spannungsschwankungen sowie Kurzzeitunterbrechungen im Netz 12. Das Einbringen der Netzspannungserfassung ermöglicht zudem eine genauere Regelung, da die Eingangsgrößen des zeitlichen Verlaufs der Amplitude der Spannung richtig erfasst werden.

Der Beobachter B kann beispielsweise (wie in FIG 2 gezeigt) als zusätzliches, externes Modul bereitgestellt sein. Er kann mit seinen Messkontakten zwischen dem speisenden Netz 12 und den Drosseln L₁, L₂, L₃ angeschlossen sein. Diese Variante ist in FIG 2 mit durchgezogenen Linien dargestellt. Alternativ können die Messkontakte auch zwischen den Drosseln L₁, L₂, L₃ und der Einspeiseeinheit 28 angeschlossen sein (in FIG 2 gestrichelt dargestellt). Eine weitere Alternative ist die Messung der Zwischenkreisspannung durch den Beobachter B (in FIG 2 ebenfalls gestrichelt angedeutet).

Die Schalteinrichtung 42 kann auch einen elektromechanischen Schalter 50 zum Überbrücken des SiC-MOSFET 46 aufweisen. Bei dem Schalter 50 kann es sich beispielsweise um ein Schütz oder ein Relais handeln. Über eine (gestrichelt dargestellte) Steuerleitung der Steuereinrichtung 44 wird der Schalter 50 nach dem Vorladen des Zwischenkreiskondensators 48 zu Beginn der Betriebsphase geschlossen. Der geringe ohmsche Widerstand des geschlossenen Schalters 50 verursacht wesentlich geringere Verluste als der SiC-MOSFET 46. Die Parallelschaltung aus dem elektromechanischen Schalter 50 und einem elektronischen SiC-Leistungsschalters (hier dem SiC-MOSFET 46) bietet gegenüber einer reinen SiC-MOSFET -Beschaltung folgenden, weiteren Vorteil: Der SiC-Leistungsschalter kann kleiner und damit kostengünstiger ausgelegt sein, da er im normalen Betrieb, d.h. in der Betriebsphase, keinen Laststrom mit großer Stromstärke leiten muss. Bei dieser Beschaltung ist es sogar möglich, einen Si-Transistor mit einem verhältnismäßig großen Durchlasswiderstand als elektronischen Leistungsschalter zu verwenden.

Der Schalter 50 kann auch zum Leiten eines Stromes von einem Generator in ein Netz verwendet werden. In diesem Fall kann die in FIG 2 gezeigte Diode D für eine geringere Nennleistung ausgelegt sein, so dass ein kostengünstigerer Typ der Diode D verwendet werden kann. Es kann gegebenenfalls auch ganz auf sie verzichtet werden.

## Patentansprüche

1. Verfahren zum Betreiben eines Frequenzumrichters (26), der eine elektrische Maschine (14) an einem elektrischen Netz (12) betreibt,
- wobei der Frequenzumrichter (26) eine Einspeiseeinheit (28) und einen Umrichter (32) aufweist, die miteinander über einen Gleichspannungs-Zwischenkreis (30) verschaltet sind, in welchem durch zumindest einen Zwischenkreiskondensator (48) eine Zwischenkreiskapazität bereitgestellt ist,
- wobei die netzseitige Einspeiseeinheit (28) dazu ausgelegt ist, zwischen einer Netz-Wechselspannung und einer Gleichspannung (U₄₈) umzuwandeln, die in dem Zwischenkreis (30) bereitgestellt wird, und der Umrichter (32) dazu ausgelegt ist, zwischen der Gleichspannung (U₄₈) und einer Wechselspannung für die elektrische Maschine (14) umzuwandeln,
- wobei der Zwischenkreis (30) einen Halbleiterschalter (46) aufweist, welcher dazu ausgelegt ist, eine Stromstärke eines von der Einspeiseeinheit (28) in den zumindest einen Zwischenkreiskondensator (48) fließenden elektrischen Stromes in Abhängigkeit von einem Steuersignal zu steuern,
- wobei der Frequenzumrichter (26) eine Messeinrichtung (60,62,68,B) zum Erfassen von Messwerten für zumindest eine von einem Betriebszustand des Frequenzumrichters (26) abhängige Messgröße (U₄₈) sowie eine Steuereinrichtung (44) aufweist, die dazu ausgelegt ist, das Steuersignal in Abhängigkeit von den erfassten Messwerten zu erzeugen, und
- wobei der Zwischenkreis (30) einspeiseseitig (40) des Halbleiterschalters (46), also in dem Teil des Zwischenkreises, der permanent mit der Einspeiseeinheit (28) elektrisch verbunden ist, einen Kommutierungskondensator (52) aufweist, durch welchen eine Kommutierungskapazität für die Einspeiseeinheit (28) bereitgestellt ist,
**gekennzeichnet durch** die Schritte:
- Koppeln der Einspeiseeinheit (28) mit dem Netz (12);
- in einer Vorladephase Aufladen des Zwischenkreiskondensators (48) mit elektrischer Energie aus dem Netz (12) und hierbei Steuern der Stromstärke des Ladestromes des Zwischenkreiskondensators (48) durch Erzeugen des Steuersignals an einem Steuereingang (G) des Halbleiterschalters (46) mittels der Steuereinrichtung (44),
- wobei bei dem Frequenzumrichter (26) mittels der Kommutierungskapazität eine beim Schalten von Komponenten der Einspeiseeinheit (28) entstehende Induktionsspannung unterhalb eines für die Funktionstüchtigkeit des Frequenzumrichters kritischen Spannungswertes gehalten wird und
- wobei der Halbleiterschalter (46) in der Vorladephase zum Steuern der Stromstärke als steuerbare Stromquelle betrieben wird und hierbei eine Stromstärke eines durch den Halbleiterschalter (46) fließenden Laststromes durch Einstellen des Steuersignals gesteuert wird.

2. Verfahren nach Anspruch 1, bei welchem das Steuersignal in Abhängigkeit von den Messwerten für zumindest eine der von der Steuereinrichtung (44) beobachteten Messgrößen (U₄₈) erzeugt wird.

3. Verfahren nach Anspruch 1 oder 2, wobei durch die Steuereinrichtung (44) aus den Messwerten für zumindest eine Messgröße (U₄₈) eine Stromstärke und/oder ein Ladezustand des Zwischenkreiskondensators (48) indirekt ermittelt wird.

4. Verfahren nach einem der Ansprüche 1 bis 3, wobei in einer Betriebsphase anhand der Messwerte eine Stromstärke überwacht wird und bei Erkennen eines Überstromes der Halbleiterschalter (46) in einen sperrenden Zustand geschaltet wird.

5. Verfahren nach einem der Ansprüche 1 bis 4, wobei in einer Betriebsphase nach einer Unterbrechung eines aus dem Netz (12) von der Einspeiseeinheit (28) empfangenen elektrischen Leistungsflusses der Zwischenkreiskondensator (48) in einer Nachladephase durch Steuern einer Stromstärke eines Nachladestromes des Zwischenkreiskondensators (48) mittels des Halbleiterschalters (46) wieder aufgeladen wird.

6. Verfahren nach einem der Ansprüche 1 bis 5, wobei ein Ladezustand (U₄₈) des Zwischenkreiskondensators (48) beobachtet wird und die Vorladephase abgebrochen und der Halbleiterschalter (46) in einen sperrenden Zustand geschaltet wird, falls nach einer vorbestimmten Zeitdauer seit Beginn der Vorladephase der Ladezustand (U₄₈) ein vorbestimmtes Kriterium erfüllt.

## Claims

1. Method for operating a frequency converter (26), which operates an electrical machine (14) on an electrical network (12),
- wherein the frequency converter (26) has a feed unit (28) and a converter (32), which are interconnected via a DC voltage intermediate circuit (30), in which an intermediate circuit capacitance is supplied by at least one intermediate circuit capacitor (48),
- wherein the network-side feed unit (28) is designed to convert between a network AC voltage and a DC voltage (U₄₈), which is supplied in the intermediate circuit (30), and the converter (32) is designed to convert between the DC voltage (U₄₈) and an AC voltage for the electrical machine (14),
- wherein the intermediate circuit (30) has a semiconductor switch (46), which is designed to control a current intensity of an electrical current flowing from the feed unit (28) into the at least one intermediate circuit capacitor (48) as a function of a control signal,
- wherein the frequency converter (26) has a measuring facility (60, 62, 68, B) for acquiring measurement values for at least one measurement variable (U₄₈) dependent upon an operating state of the frequency converter (26), and also has a control facility (44), which is designed to generate the control signal as a function of the acquired measurement values, and
- wherein the intermediate circuit (30) has a commutation capacitor (52) on the feed side (40) of the semiconductor switch (46), i.e. in the part of the intermediate circuit which has a permanent electrical connection to the feed unit (28), through which commutation capacitor (52) a commutation capacitance for the feed unit (28) is supplied,
**characterised by** the steps:
- coupling the feed unit (28) to the network (12);
- in a pre-charging phase, charging the intermediate circuit capacitor (48) with electrical energy from the network (12) and, in doing so, controlling the current intensity of the charging current of the intermediate circuit capacitor (48) by generating the control signal at a control input (G) of the semiconductor switch (46) by means of the control facility (44),
- wherein, in the frequency converter (26), an induction voltage arising when switching components of the feed unit (28) is kept below a voltage value which it critical for the functionality of the frequency converter by means of the commutation capacitance and
- wherein the semiconductor switch (46), in the pre-charging phase, is operated to control the current intensity as a controllable current source and, in doing so, a current intensity of a load current flowing through the semiconductor switch (46) is controlled by adjusting the control signal.

2. Method according to claim 1, in which the control signal is generated as a function of the measurement values for at least one of the measurement variables (U₄₈) observed by the control facility (44).

3. Method according to claim 1 or 2, wherein a current intensity and/or a charging state of the intermediate circuit capacitor (48) is determined indirectly by the control facility (44) from the measurement values for at least one measurement variable (U₄₈).

4. Method according to one of claims 1 to 3, wherein in one operating phase, a current intensity is monitored on the basis of the measurement values and, if an excess current is identified, the semiconductor switch (46) is switched to a blocking state.

5. Method according to one of claims 1 to 4, wherein in one operating phase, after interrupting an electrical power flow received from the network (12) by the feed unit (28), the intermediate circuit capacitor (48) is charged again in a recharging phase by controlling a current intensity of a recharging current of the intermediate circuit capacitor (48) by means of the semiconductor switch (46).

6. Method according to one of claims 1 to 5, wherein a charging state (U₄₈) of the intermediate circuit capacitor (48) is observed and the pre-charging phase is aborted and the semiconductor switch (46) is switched into a blocking state, if the charging state (U₄₈) meets a predetermined criterion after a predetermined length of time since the beginning of the pre-charging phase.

## Revendications

1. Procédé pour faire fonctionner un convertisseur (26) de fréquence, qui fait fonctionner une machine (14) électrique sur un réseau (12) électrique :
- dans lequel le convertisseur (26) de fréquence a une unité (28) d'alimentation et un convertisseur (32), qui sont connectés l'un à l'autre par un circuit (30) intermédiaire à tension continue, dans lequel une capacité de circuit intermédiaire est procurée par au moins un condensateur de circuit intermédiaire,
- dans lequel l'unité (28) d'alimentation du côté du réseau est conçue pour passer d'une tension alternative de réseau à une tension (U₄₈) continue, qui est mise à disposition dans le circuit (30) intermédiaire, et le convertisseur (32) est conçu pour commuter entre la tension (U₄₈) continue et une tension alternative pour la machine (14) électrique,
- dans lequel le circuit (30) intermédiaire a un interrupteur (46) à semi-conducteur, qui est conçu pour commander, en fonction d'un signal de commande, une intensité d'un courant électrique passant de l'unité (28) d'alimentation au au moins un condensateur (48) de circuit intermédiaire,
- dans lequel le convertisseur (26) de fréquence a un dispositif (60 62 68, B) de mesure pour relever des valeurs de mesure d'au moins une grandeur (48) de mesure, qui dépend de l'état de fonctionnement du convertisseur (26) de fréquence, ainsi qu'un dispositif (44) de commande conçu pour produire le signal de commande en fonction des valeurs de mesure relevées et
- dans lequel le circuit (30) intermédiaire a, du côté (40) de l'alimentation de l'interrupteur (46) à semi-conducteur, donc dans la partie du circuit intermédiaire qui est connectée électriquement en permanence avec l'unité (28) d'alimentation, un condensateur (52) de commutation, par lequel une capacité de commutation de l'unité (28) d'alimentation est mise à disposition,
**caractérisé par** les stades :
- connexion de l'unité (28) d'alimentation au réseau (12) ;
- dans une phase de précharge, charge du condensateur (48) intermédiaire par de l'énergie électrique du réseau (12) et ainsi commande de l'intensité du courant de charge du condensateur (48) de circuit intermédiaire par production du signal de commande sur une entrée (G) de commande de l'interrupteur (46) à semi-conducteur au moyen du dispositif (44) de commande,
- dans lequel on maintient, dans le convertisseur (26) de fréquence, au moyen de la capacité de commutation, une tension d'induction, créée lors de la mise en circuit de composants de l'unité (28) d'alimentation, en dessous d'une valeur de tension critique pour l'aptitude à fonctionner du convertisseur de fréquence et
- dans lequel on fait fonctionner l'interrupteur (46) à semi-conducteur dans la phase de précharge pour commander l'intensité du courant comme source de courant pouvant être commandée et on commande ainsi, en réglant le signal de commande, une intensité d'un courant de charge passant dans l'interrupteur (46) à semi-conducteur.

2. Procédé suivant la revendication 1, dans lequel on produit le signal de commande en fonction des valeurs de mesure d'au moins une grandeur (U₄₈) de mesure observée par le dispositif (44) de commande.

3. Procédé suivant la revendication 1 ou 2, dans lequel on détermine, indirectement, par le dispositif (44) de mesure à partir des valeurs de mesure d'au moins une grandeur (U₄₈) de mesure, une intensité du courant et/ou un état de charge du condensateur (48) de circuit intermédiaire.

4. Procédé suivant l'une des revendications 1 à 3, dans lequel, dans une phase de fonctionnement, on contrôle une intensité du courant à l'aide des valeurs de mesure et, si l'on détecte une surintensité, on met l'interrupteur (46) à semi-conducteur dans l'état bloqué.

5. Procédé suivant l'une des revendications 1 à 4, dans lequel, dans une phase de fonctionnement après une interruption d'un flux de puissance électrique reçu par l'unité (28) d'alimentation à partir du réseau (12), on recharge le condensateur (48) de circuit intermédiaire dans une phase de recharge, en commandant une intensité d'un courant de recharge du condensateur (48) de circuit intermédiaire au moyen de l'interrupteur (46) à semi-conducteur.

6. Procédé suivant l'une des revendications 1 à 5, dans lequel on observe un état (U₄₈) de charge du condensateur (48) de circuit intermédiaire et on interrompt la phase de précharge et on met l'interrupteur (46) à semi-conducteur dans un état bloqué, si, après un laps de temps déterminé à l'avance, depuis le début de la phase de précharge, l'état (U₄₈) de charge satisfait un critère déterminé à l'avance.
